# EUROPEAN PATENT APPLICATION

(11) **EP 4 593 399 A1**
(43) Date of publication of application: **30.07.2025**
(21) Application number: 23867561.5
(22) Date of filing: 20.09.2023
(51) Int. Cl.: H04N 21/44

(54) **METHOD FOR FILMING AND GENERATING VIDEO, AND RELATED DEVICE**

(30) Priority: 20.09.2022 CN 202211148945
(71) Applicant: Chengdu Guanghexinhao Technology Co., Ltd., Chengdu, Sichuan 610095 (CN)
(72) Inventor: CAI, Yangming, Beijing 100028 (CN)
(74) Representative: Dentons UK and Middle East LLP
(86) International application number: PCT/CN2023/120069
(87) International publication number: WO 2024/061274

(57) **Abstract**

The present disclosure provides a method for filming and generating a video, and a related device. The method includes: displaying a video filming page in response to triggering a filming process; displaying first prompt information in the video filming page, wherein the first prompt information is used for prompting a user to film first content; displaying second prompt information in the video filming page in response to determining that the filming of the first content is completed, wherein the second prompt information is used for prompting the user to film second content, and a filming object of the second content is different from a filming object of the first content; and generating a video based on the first content and the second content in response to determining that the filming of the second content is completed.

## Description

### CROSS-REFERENCE TO RELATED APPLICATION(S)

This application claims priority to Chinese Application No. 202211148945.9, filed on September 20, 2022, and the disclosure of which is incorporated herein by reference in its entirety.

### FIELD

The present disclosure relates to the technical field of computers, and particularly relates to a method for filming and generating a video, and a related device.

### BACKGROUND

In the related art, users usually have a high degree of randomness when filming videos. Moreover, due to individual differences in filming skills, the quality of the videos varies greatly.

### SUMMARY

The present disclosure provides a method for filming and generating a video, and a related device, so as to solve or partially solve the above problems.

In a first aspect of the present disclosure, provided is a method for filming and generating a video, including:
displaying a video filming page in response to triggering a filming process;
displaying first prompt information in the video filming page, wherein the first prompt information is used for prompting a user to film first content;
displaying second prompt information in the video filming page in response to determining that the filming of the first content is completed, wherein the second prompt information is used for prompting the user to film second content, and a filming object of the second content is different from a filming object of the first content; and
generating a video based on the first content and the second content in response to determining that the filming of the second content is completed.

In a second aspect of the present disclosure, provided is an apparatus for filming and generating a video, including:
a display module, configured to: display a video filming page in response to triggering a filming process; display first prompt information in the video filming page, wherein the first prompt information is used for prompting a user to film first content; and display second prompt information in the video filming page in response to determining that the filming of the first content is completed, wherein the second prompt information is used for prompting the user to film second content, and a filming object of the second content is different from a filming object of the first content; and
a generation module, configured to generate a video based on the first content and the second content in response to determining that the filming of the second content is completed.

In a third aspect of the present disclosure, provided is a computer device, including one or more processors, a memory, and one or more programs, wherein the one or more programs are stored in the memory and are executed by the one or more processors, and the program includes instructions for performing the method according to the first aspect.

In a fourth aspect of the present disclosure, provided is a non-volatile computer-readable storage medium including a computer program, wherein the computer program, when executed by one or more processors, causes the processor to perform the method according to the first aspect.

In a fifth aspect of the present disclosure, provided is a computer program product, including computer program instructions, wherein the computer program instructions when executed on a computer, causes the method according to the first aspect.

According to the method for filming and generating the video provided in the present disclosure, by providing prompt information during a video filming process of the user, the user is guided to film corresponding content, so that the finally generated video is more tightly combined with the actual scenario, and more useful information can be contributed.

### BRIEF DESCRIPTION OF THE DRAWINGS

To illustrate technical solutions in the present disclosure or in the related art more clearly, a brief introduction on the drawings which are needed in the description of the embodiments or the related art is given below. Apparently, the drawings in the description below are merely embodiments of the present disclosure, and those ordinary skilled in the art may also obtain other drawings according to these drawings without any creative effort.
FIG. 1 illustrates a schematic diagram of an exemplary system provided in an embodiment of the present disclosure.
FIG. 2A illustrates a schematic diagram of an exemplary page according to an embodiment of the present disclosure.
FIG. 2B illustrates a schematic diagram of an exemplary page according to an embodiment of the present disclosure.
FIG. 2C illustrates a schematic diagram of an exemplary page according to an embodiment of the present disclosure.
FIG. 2D illustrates a schematic diagram of an exemplary page according to an embodiment of the present disclosure.
FIG. 2E illustrates a schematic diagram of an exemplary page according to an embodiment of the present disclosure.
FIG. 2F illustrates a schematic diagram of an exemplary page according to an embodiment of the present disclosure.
FIG. 3A illustrates a schematic diagram of an exemplary page according to an embodiment of the present disclosure.
FIG. 3B illustrates a schematic diagram of an exemplary page according to an embodiment of the present disclosure.
FIG. 3C illustrates a schematic diagram of an exemplary page according to an embodiment of the present disclosure.
FIG. 3D illustrates a schematic diagram of an exemplary page according to an embodiment of the present disclosure.
FIG. 3E illustrates a schematic diagram of an exemplary page according to an embodiment of the present disclosure.
FIG. 3F illustrates a schematic diagram of an exemplary page according to an embodiment of the present disclosure.
FIG. 3G illustrates a schematic diagram of an exemplary page according to an embodiment of the present disclosure.
FIG. 3H illustrates a schematic diagram of an exemplary page according to an embodiment of the present disclosure.
FIG. 4A illustrates a schematic diagram of an exemplary page according to an embodiment of the present disclosure.
FIG. 4B illustrates a schematic diagram of an exemplary page according to an embodiment of the present disclosure.
FIG. 4C illustrates a schematic diagram of an exemplary page according to an embodiment of the present disclosure.
FIG. 4D illustrates a schematic diagram of an exemplary page according to an embodiment of the present disclosure.
FIG. 4E illustrates a schematic diagram of an exemplary page according to an embodiment of the present disclosure.
FIG. 4F illustrates a schematic diagram of an exemplary page according to an embodiment of the present disclosure.
FIG. 4G illustrates a schematic diagram of an exemplary page according to an embodiment of the present disclosure.
FIG. 5A illustrates a schematic diagram of an exemplary page according to an embodiment of the present disclosure.
FIG. 5B illustrates a schematic diagram of an exemplary page according to an embodiment of the present disclosure.
FIG. 5C illustrates a schematic diagram of an exemplary page according to an embodiment of the present disclosure.
FIG. 5D illustrates a schematic diagram of an exemplary page according to an embodiment of the present disclosure.
FIG. 5E illustrates a schematic diagram of an exemplary page according to an embodiment of the present disclosure.
FIG. 5F illustrates a schematic diagram of an exemplary page according to an embodiment of the present disclosure.
FIG. 5G illustrates a schematic diagram of an exemplary page according to an embodiment of the present disclosure.
FIG. 5H illustrates a schematic diagram of an exemplary page according to an embodiment of the present disclosure.
FIG. 5I illustrates a schematic diagram of an exemplary page according to an embodiment of the present disclosure.
FIG. 5J illustrates a schematic diagram of an exemplary page according to an embodiment of the present disclosure.
FIG. 5K illustrates a schematic diagram of an exemplary page according to an embodiment of the present disclosure.
FIG. 5L illustrates a schematic diagram of an exemplary page according to an embodiment of the present disclosure.
FIG. 6 illustrates a schematic diagram of an exemplary page according to an embodiment of the present disclosure.
FIG. 7 illustrates a schematic flow chart of an exemplary method provided in an embodiment of the present disclosure.
FIG. 8 illustrates a schematic diagram of a hardware structure of an exemplary computer device provided in an embodiment of the present disclosure.
FIG. 9 is a schematic diagram of an exemplary apparatus provided in an embodiment of the present disclosure.

### DETAILED DESCRIPTION OF EMBODIMENTS

In order to make the objectives, technical solutions and advantages of the present disclosure clearer, the present disclosure will be further described in detail below in combination with specific embodiments and with reference to the drawings.

It should be noted that, unless otherwise defined, technical terms or scientific terms used in the embodiments of the present disclosure should have the same meanings as commonly understood those ordinary skilled in the art to which the present disclosure belongs. The terms "first", "second" and similar words used in the embodiments of the present disclosure do not represent any order, number or importance, but are merely used to distinguish different components. "Comprise" or "include" and other similar terms mean that an element or an object appearing in front of the word encompasses elements or objects and their equivalents listed after the word, but do not exclude other elements or objects. "Connection" or "connected" and other similar terms are not limited to a physical or mechanical connection, but may include an electrical connection, regardless of being direct or indirect. The terms "upper", "lower", "left", "right" and the like are only used to represent relative location relationships, and when an absolute location of a described object changes, the relative location relationship may also be changed accordingly.

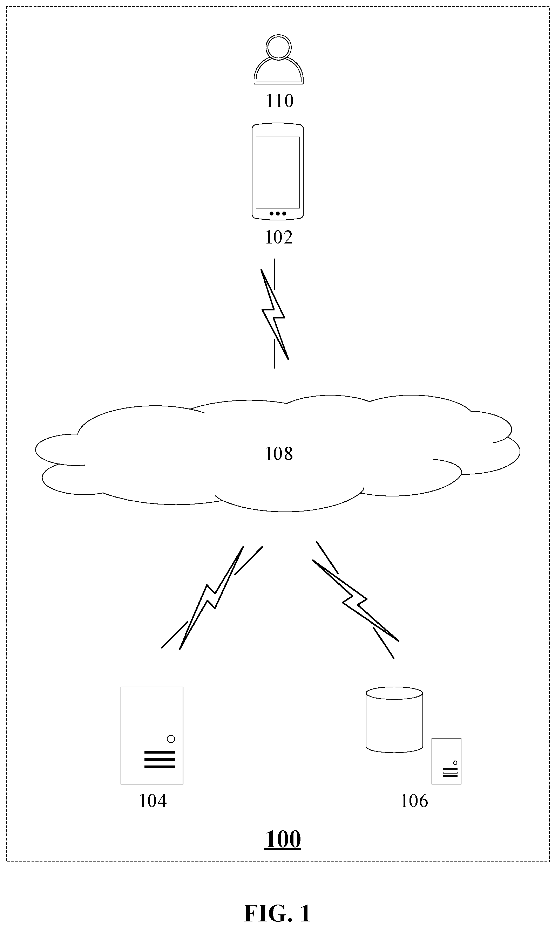

FIG. 1 illustrates a schematic diagram of an exemplary system 100 provided in an embodiment of the present disclosure.

As shown in FIG. 1, the system 100 may include at least one terminal device (e.g., a terminal device 102), at least one server 104, and at least one database server 106. There may be a medium for providing communication links among the terminal device 102, the server 104 and the database server 106, for example, a network 108. The network 108 may include various connection types, for example, wired or wireless communication links or optical fiber cables, etc.

A user 110 may use the terminal device 102 to interact with the server 104 via the network 108, so as to receive or send a message, etc. Various applications (APPs) may be installed on the terminal device 102, for example, video applications, social applications, payment applications, web browsers, instant messaging tools, etc.

The terminal device 102 herein may be hardware and may also be software. When the terminal device 102 is hardware, the terminal device 102 may be various electronic devices having display screens, including, but not limited to, smartphones, tablet computers, e-book readers, MP3 players, laptops (Laptops), desktop computers (PCs), and the like. When the terminal device 102 is software, the terminal device 102 may be installed in the electronic devices listed above. The terminal device 102 may be implemented as a plurality of software or software modules (e.g., used for providing a distributed service), and may also be implemented as a single software or software module, which is not specifically limited herein.

When the terminal device 102 is hardware, a video collection device may be further installed thereon. The video collection device may be various devices capable of implementing a video collection function, such as a camera, a sensor, and the like. The user 110 may use the video collection device on the terminal device 102 to collect a video.

The server 104 may be a server for providing various services, for example, a background server that provides a support for various applications displayed on the terminal device 102. The background server may receive a video sent by the terminal device 102, and may provide the video for other users for viewing.

The database server 106 may also be a database server for providing various services. For example, the foregoing video may be stored in the database server 106, and when it is required to provide the video for the user, the server 104 may call the video from the database server 106 and provide the video for the terminal user.

The server 104 and the database server 106 herein may also be hardware or software. When they are hardware, the server 104 and the database server 106 may be implemented as a distributed server cluster composed of a plurality of servers, and may also be implemented as a single server. When they are software, the server 104 and the database server 106 may be implemented as a plurality of software or software modules (e.g., used for providing distributed services), and may also be implemented as a single software or software module, which is not specifically limited herein.

It should be noted that, a method for filming and generating a video provided in the embodiments of the present application is generally performed by the terminal device 102. Correspondingly, an apparatus for filming and generating a video is also generally disposed in the terminal device 102.

It should be understood that, the numbers of the terminal devices, the networks, the servers and the database servers in FIG. 1 are merely illustrative. Depending on implementation requirements, there may be any numbers of terminals, networks, database servers and servers.

Based on the foregoing description, the user 110 may use the terminal device 102 to film a video. It can be understood that, when the filming skill level of the user 110 is different, the quality of the filmed video is also different.

For example, in a store/restaurant review scenario, if the filming awareness and the filming level of the user are insufficient, the user does not know how to find scenes and how to compose, resulting in insufficient video content and sometimes even no substantial content.

In some video applications (APPs), the users may use the augmented reality (AR) technology to add effects to the videos when filming the videos, however, in the related art, for most AR effects, each user has the same effect experience that the propagation performance may be very high, but it is unlikely to facilitate the publishing of the video. In addition, this effect is usually a face effect, such that the users are more prone to selfie rather than filming store review videos, and thus it is difficult to increase the amount of videos for an offline scenario.

In the related art, in order to increase the number and quality of videos in the store review scenario, some offline activities may be designed to guide customers to film store review videos. However, since these activities lack offline guidance, the users do not know that effect videos can be filmed in the current scenario, resulting in a very low contribution.

In addition, in order to improve the interestingness of video filming, some large landmark effects are also designed in the related art to guide the users to film offline scenario videos. However, the model production cycle of the landmark effect is relatively long, and the landmark effect may merely act on one landmark in general, and thus cannot be applied in scale. In addition, the effect is poor in usefulness, and it is impossible to make the users perceive consumption values, service characteristics, cuisine tastes and the like of offline scenarios by means of effect content. In addition, since the landmark effect lacks a location based service (LBS) push mechanism, the users in the vicinity of the landmark are unaware of such effects, thus losing the opportunity to guide the users to create content.

In view of this, in order to improve the video creation quality of a user, an embodiment of the present disclosure provides a method for filming and generating a video, which guides the user to film corresponding content by providing prompt information during a video filming process of the user, so that the finally generated video is more tightly combined with the actual scenario, and more useful information can be contributed.

In an initial state, the user 110 may use the terminal device 102 to open a video APP, and then click on a filming button to trigger a filming process.

In some embodiments, in order to combine a filmed video with an offline scenario more tightly, some special trigger mechanisms may be designed to start the video filming process.

As an optional embodiment, some objects, which may be identified by the user 110 by using the terminal device 102, may be set in an offline scenario, so that the filming process is triggered when it is determined that an identification object is a target identification object for starting the filming process. For example, in a store review scenario, a Quick Response (QR) code may be set in a store to serve as the identification object, and after the terminal device 102 scans and identifies that the QR code is a QR code for starting the video filming process, the filming process may be triggered.

In some embodiments, the foregoing target identification object may be associated with a target filming process, so that after the filming process is triggered, each video filming phase is associated with a specific node of the target filming process, and then prompt information is displayed in each video filming phase corresponds to the specific node. In this way, a video filmed based on the target filming process can better conform to the corresponding scenario and can contribute more useful information of the scenario.

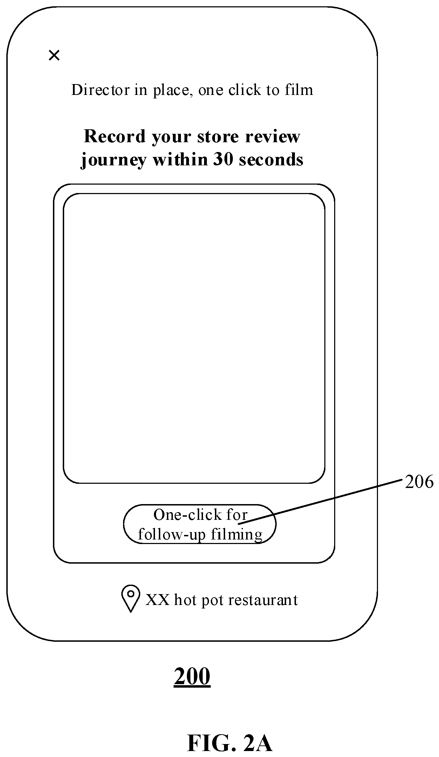

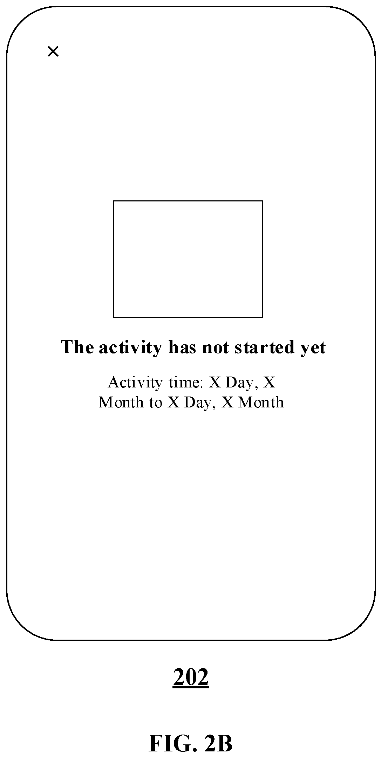

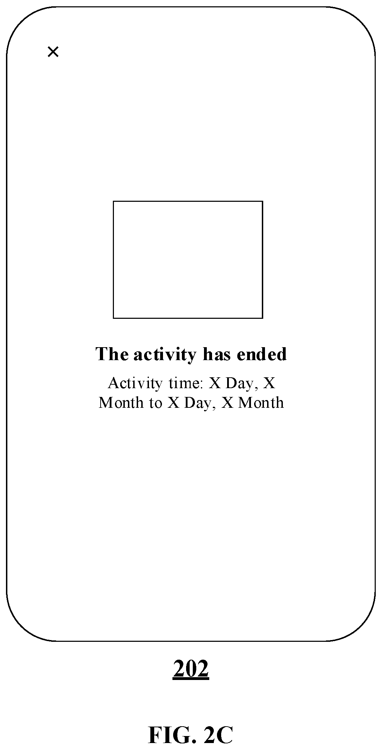

As an optional embodiment, a mechanism for triggering the filming process may also be associated with some activities, so that the video filming process is more interesting, and the user experience is improved. Therefore, after it is determined that the identification object is the target identification object for starting the filming process, the terminal device 102 may further determine whether an activity corresponding to the target identification object is in a validity period, and if it is determined that the activity is in the validity period, further trigger the filming process, and may correspondingly display a page 200, as shown in FIG. 2A. If the activity is not in the validity period, corresponding prompt information may be displayed in the page without entering the filming process. FIG. 2B and FIG. 2C respectively illustrate a page 202 where the activity has not started and the activity has ended, and as shown in FIG. 2B and FIG. 2C, the page 202 gives two kinds of prompt information that the activity is not in the validity period, so as to prompt the user that the current activity is not in the validity period. Moreover, in some embodiments, the prompt information may further include information about an actual validity period of the activity, so that more useful information can be provided for the user.

In some embodiments, the foregoing activity mechanism may also be not associated with a process for identifying a specific object, but exists independently. For example, when the user 110 uses the terminal device 102 to use a video APP, a process of determining whether the activity is in the validity period may be triggered by an activity page or an activity button displayed in a certain video, and then the user 110 enters the page 200 of FIG. 2A when it is determined that the activity is in the validity period.

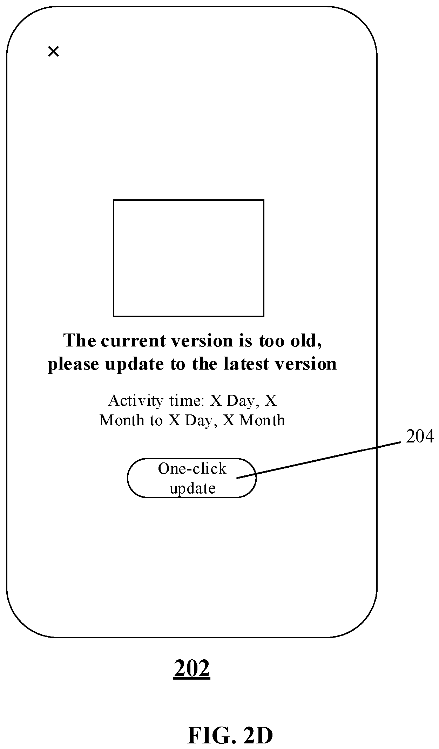

It can be understood that in some cases, there may be a case where the user does not update the APP and thus cannot open the activity page. Therefore, in some embodiments, when the terminal device 102 identifies that the APP is not updated to the latest version, the page 202 shown in FIG. 2D may be displayed, so as to prompt the user that the APP is not updated. As an optional embodiment, as shown in FIG. 2D, an update button 204 may also be displayed in the page 202, and when the user 110 clicks on the button 204, the terminal device 102 may skip to an update page (not shown in the figure) in response to the button 204 being triggered, so that the APP can be quickly updated.

As another optional embodiment, in addition to the foregoing embodiments of triggering the filming process, the filming process may also be triggered based on the current location of the user. For example, the terminal device 102 may obtain the current location of the user (for example, obtain the current location by using GPS positioning), and may further trigger the filming process when it is determined that the current location of the user is in a target store. For example, when it is determined that the current location of the user is in a certain hot pot restaurant, a corresponding filming process may be triggered.

In some embodiments, the foregoing target store may be associated with the target filming process, so that after the filming process is triggered, each video filming phase is associated with a specific node of the target filming process, and then the prompt information displayed in each video filming phase corresponds to the specific node. In this way, a video filmed based on the target filming process can better conform to the scenario corresponding to the target store, and more useful information of the scenario can be contributed. For example, if the store where the user is currently located is a certain hot pot restaurant, the corresponding target filming process may be a filming process related to store review, and in particular, may be a filming process related to delicious food store review (e.g., gesture snapshot + delicious food recording + environment recording).

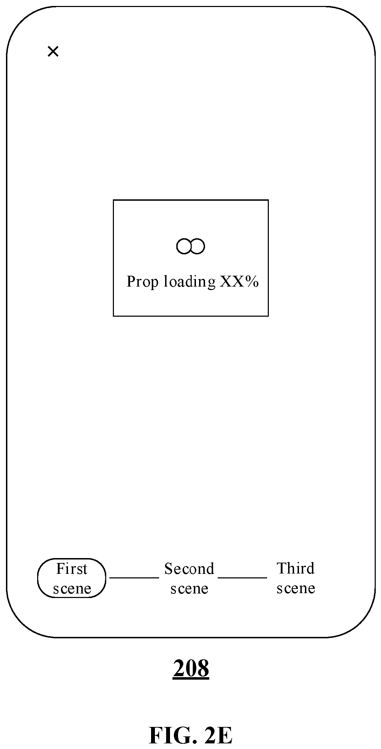

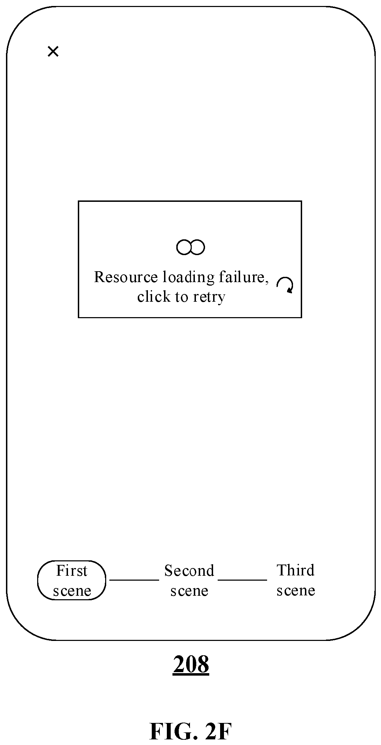

Referring back to FIG. 2A, after the terminal device 102 enters the page 200, a button 206 for triggering the video filming process may also be displayed in the page 200, and when the user 110 clicks on the button 206, the terminal device 102 may enter a resource loading page 208 in response to the button 206 being triggered, as shown in FIG. 2E. The current loading progress may be displayed in the page 208, so that the user can know the resource loading condition according to the information. As an optional embodiment, in the case of resource loading failure, loading failure information may be displayed in the page 208, as shown in FIG. 2F.

After resource loading is completed, the filming process may be formally entered, and a video filming page 300 is displayed.

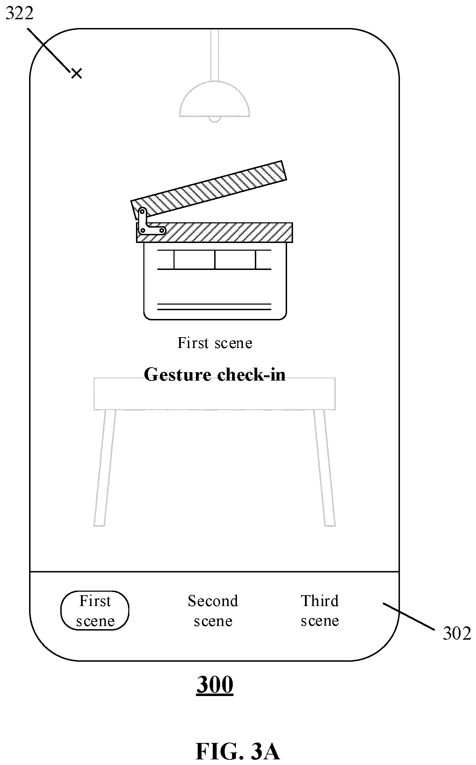

FIG. 3A illustrates a schematic diagram of an exemplary page 300 according to an embodiment of the present disclosure.

As shown in FIG. 3A, as an optional embodiment, the entire filming process may be divided into three sections, which respectively correspond to a first scene, a second scene and a third scene. After the filming process is started, the first scene may be entered at first. In some embodiments, as shown in FIG. 3A, a phase display bar 302 may be displayed at the bottom of the page 300, the phase display bar 302 may show all phases of the entire filming process, and may highlight the current phase, thereby prompting the user of the current phase. For example, as shown in FIG. 3A, the "First scene" is highlighted, so as to prompt the user that it is in the first phase of the filming process at present.

In some embodiments, at the beginning of entering each phase, opening information for entering the phase may be displayed. For example, as shown in FIG. 3A, when entering the first scene, words "First scene" may be displayed in the page 300, so as to prompt the user to enter the first phase of video filming now. As an optional embodiment, thematic information of the current phase may also be displayed in the page 300, so as to prompt the user of the filming theme of the current phase. For example, as shown in FIG. 3A, words "Gesture snapshot" may be displayed in the page 300, so as to prompt the user that the theme of the current phase is to take a snapshot via a gesture. In some embodiments, as shown in FIG. 3A, an image of a clapper board may also be displayed in the page 300, and the image of the clapper board may also be an image when the clapper board is in a state prior to board clapping, so as to prompt the user that the filming in the current phase is about to be started, thereby enhancing the interestingness of video filming, and improve the user experience.

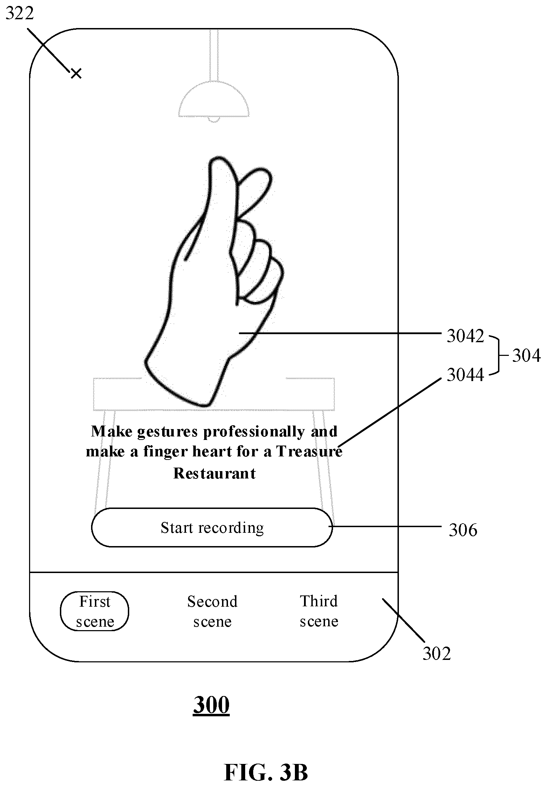

Next, first prompt information 304 for prompting the user to film first content may be displayed in the page 300, as shown in FIG. 3B.

In some embodiments, a filming object of the first content is an interaction gesture (for example, making a finger heart, making 6, making a like, and the like); the first prompt information 304 may include a gesture image 3042 corresponding to the interaction gesture. In this way, the user may be prompted that a personalized store review video may be filmed via posture snapfilmed at present, thereby highlighting the sense of ceremony and increasing the interestingness. As an optional embodiment, as shown in FIG. 3B, the first prompt information 304 may further include test prompt information 3044, in this way, the user can be better guided to make a corresponding filming action via image-text matching prompt information.

Optionally, as shown in FIG. 3B, a filming button 306 may also be displayed in the page 300, the user 110 may trigger the video filming in the first phase by clicking on the button 306, and the terminal device 102 may start to use a camera to film content in response to a trigger operation for the button 306.

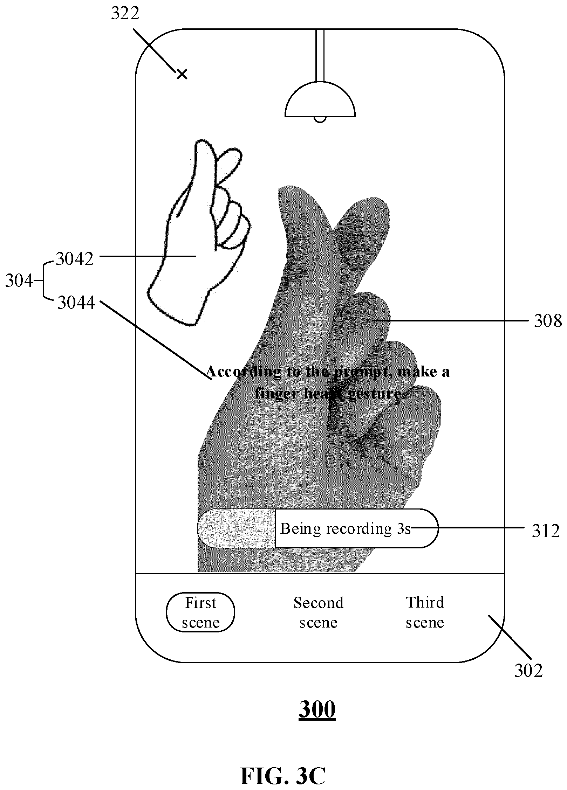

FIG. 3C illustrates a schematic diagram of another exemplary page 300 according to an embodiment of the present disclosure.

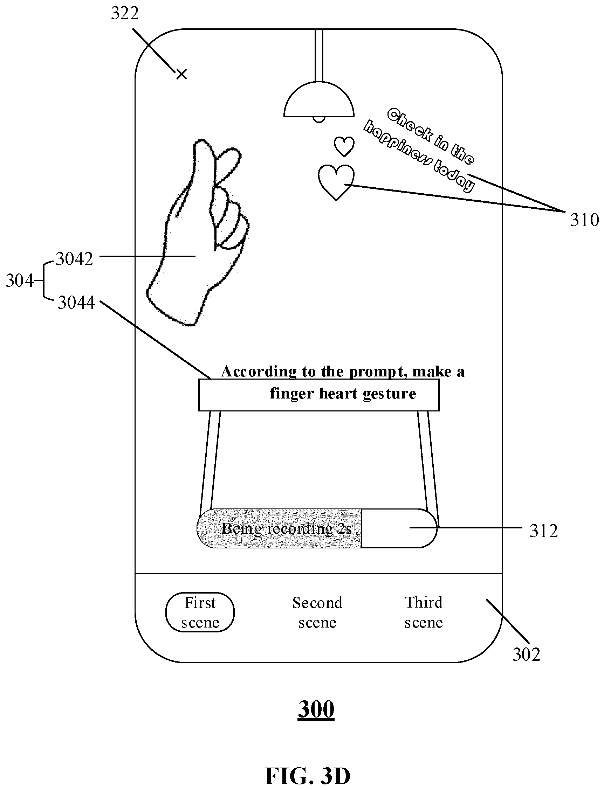

As shown in FIG. 3C, after the filming is started, the terminal device 102 may display the filmed content in the page 300. During the filming process, the terminal device 102 may identify the first content, and if it is identified that the first content includes a user gesture 308 corresponding to the interaction gesture (for example, making a finger heart), the terminal device 102 may display, in the page 300 in an overlaying manner, a first effect 310 corresponding to the interaction gesture, as shown in FIG. 3D, thereby improving the interestingness of video filming via the first effect, and meanwhile, the user may be prompted of a gesture snapfilmed success via the first effect.

With continued reference to FIG. 3C, in some embodiments, prompt information 304 may still be displayed in the page 300, so that a continuous reminding function can be achieved. As an optional embodiment, the display location of the gesture image 3042 may be a blank on the page 300, thus the user may not be affected to view the filmed picture. In some embodiments, as shown in FIG. 3C, during the filming process, a progress bar 312 may also be displayed in the page 300 to prompt the user of the current filming progress. As an optional embodiment, the progress bar 312 may further include a filming time countdown to prompt the user of a remaining filming time of the current phase.

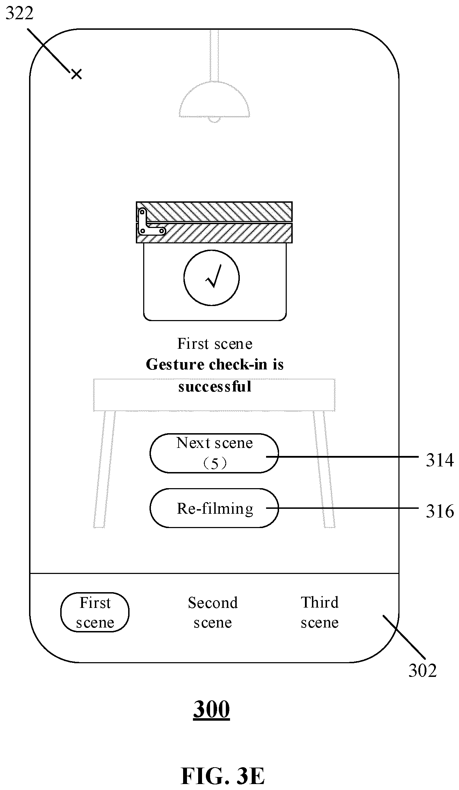

At the end of the filming time countdown, if the user gesture 308 has been successfully filmed, as shown in FIG. 3E, information for indicating the end of the filming in the first phase may be displayed in the page 300, for example, "Gesture snapfilmed is successful". Moreover, optionally, an image of the clapper board in a state of clapping end may also be displayed in the page 300, so as to prompt the user of the end of the filming in the first phase in an image-text combination manner. In some embodiments, as shown in FIG. 3E, a next-scene button 314 may also be displayed in the page 300, and when the user 110 clicks on the button 314, the terminal device 102 may start to directly skip to the second scene in response to a trigger operation for the button 314. Optionally, the next-scene button 314 may also include a countdown (e.g., "5" displayed in the button 314 in FIG. 3E indicates that there are still 5 seconds left in the countdown), and if the user 110 does not actively trigger the button 314 at the end of the countdown, it may automatically skip to the second scene. As an optional embodiment, as shown in FIG. 3E, a re-filming button 316 may also be displayed in the page 300, and when the user 110 clicks on the button 316, the terminal device 102 may return to the page of FIG. 3A or FIG. 3B in response to a trigger operation for the button 316, and restart the filming of the first scene.

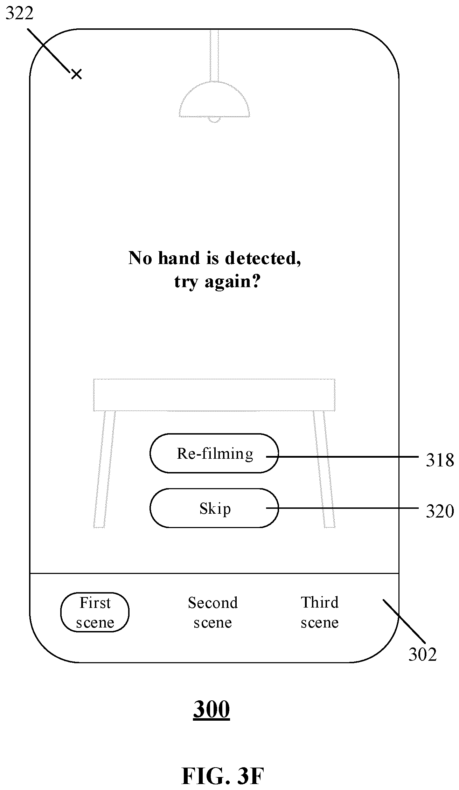

In some embodiments, if the user gesture 308 is not filmed at the end of the filming time countdown, corresponding prompt information may be displayed in the page 300. For example, as shown in FIG. 3F, words "No hand is detected, try again?" may be displayed in the page 300, so as to remind the user that no corresponding gesture is detected, and the snapfilmed is unsuccessful. Moreover, a re-filming button 318 may be displayed in the page 300, and when the user 110 clicks on the button 318, the terminal device 102 may return to the page of FIG. 3A or FIG. 3B in response to a trigger operation for the button 318, so as to restart the filming of the first scene. In some embodiments, a skip button 320 may also be displayed in the page 300, and when the user 110 clicks on the button 320, the terminal device 102 may skip the first scene and directly skip to the second scene in response to a trigger operation for the button 320.

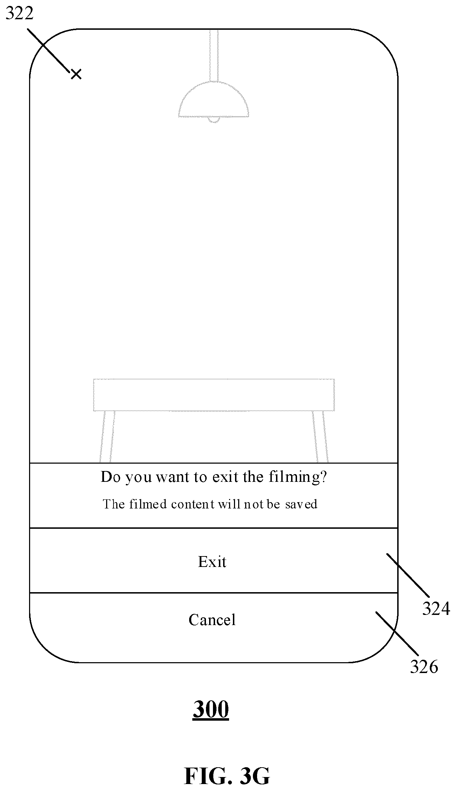

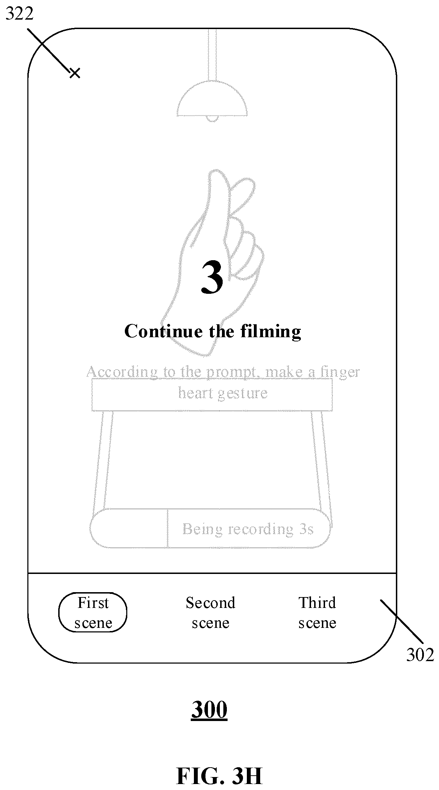

In some embodiments, as shown in FIGs. 3A-3F, an exit button 322 may also be displayed on a top left corner of the page 300, so that the user may exit the filming process at any time when the user does not want to continue the video filming. As shown in FIG. 3G, when the user 110 clicks on the button 322, the terminal device 102 may display prompt information of being exiting from the filming in the page 300 in response to a trigger operation for the button 322, and may display an exit button 324 and a cancel button 326. When the user 110 clicks on the exit button 324, the terminal device 102 may close the page 300 and exit the filming process in response to a trigger operation for the exit button 324. When the user 110 clicks on the cancel button 326, the terminal device 102 may return to the filming process in response to a trigger operation for the cancel button 326. Optionally, before returning to the filming process, countdown information of continuing the filming may be displayed in the page 300, as shown in FIG. 3H, therefore the filming process is normally returned at the end of the countdown.

After the filming of the first content is completed, the second scene may be entered.

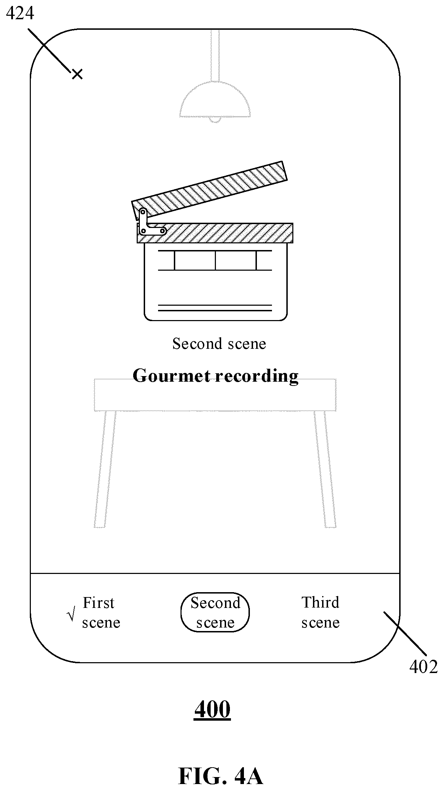

FIG. 4A illustrates a schematic diagram of an exemplary page 400 according to an embodiment of the present disclosure.

As shown in FIG. 4A, opening information of entering the phase may be displayed in a video filming page 400. For example, as shown in FIG. 4A, when entering the second scene, words "Second scene" may be displayed in the page 400, so as to prompt the user to enter the second phase of video filming now. As an optional embodiment, thematic information of the current phase may also be displayed in the page 400, so as to prompt the user of the filming theme of the current phase. For example, as shown in FIG. 4A, words "Delicious food recording" may be displayed in the page 400, so as to prompt the user that the theme of the current phase is to film delicious food. In some embodiments, as shown in FIG. 4A, an image of a clapper board may also be displayed in the page 400, and the image of the clapper board may also be an image when the clapper board is in a state prior to board clapping, so as to prompt the user that the filming in the current phase is about to be started, thereby enhancing the interestingness of video filming, and improve the user experience. It can be understood that the thematic information displayed in the page 400 is related to the current filming scenario, for example, in the present embodiment, a filming scenario of delicious food store review is illustrated, so the theme of the second scene may be "Delicious food recording". When the filming scenarios are different, the corresponding thematic information may be different, for example, if the filmed video is nail salon exploration, then the theme of the second scene may be "Manicure recording".

In some embodiments, as shown in FIG. 4A, a phase display bar 402 may be displayed at the bottom of the page 400, the phase display bar 402 may display all phases of the entire filming process, and may highlight the current phase, thereby prompting the user of the current phase. For example, as shown in FIG. 4A, "Second scene" is highlighted, so as to prompt the user that it is in the second phase of the filming process at present. Optionally, a completed phase (e.g., "√" in front of "First scene" in FIG. 4A) may also be selected in the phase display bar 402, so as to prompt the user which phases have been completed.

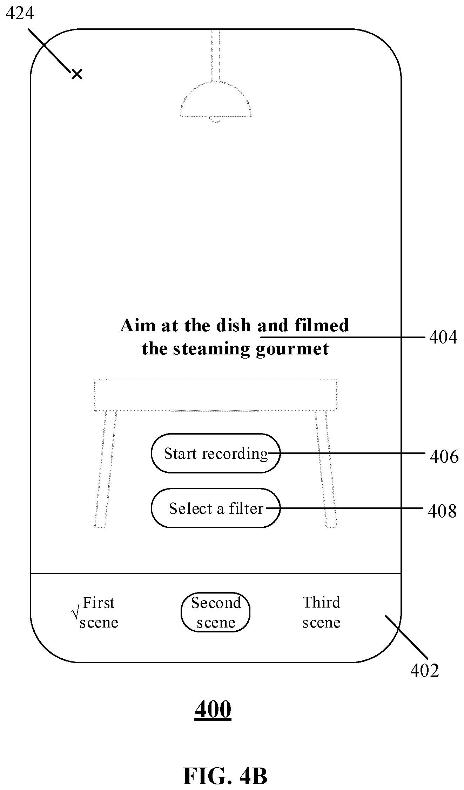

Next, second prompt information 404 for prompting the user to film second content may be displayed in the page 400, as shown in FIG. 4B. A filming object of the second content is different from the filming object of the first content. In some embodiments, a video filmed in the current filming process may be a store review video (e.g., delicious food store review, hotel experience, cosmetology and hairdressing exploration, and the like), the filming object of the second content may be a commodity provided in a store (e.g., the commodity may be delicious food in a delicious food store review scenario, and the commodity may be a room of a hotel in a hotel experience scenario, and the like).

Optionally, as shown in FIG. 4B, a filter selection button 408 may also be displayed in the page 400, the user 110 may click on the button 408 to pop up a filter selection window (not shown in the figure) in the page 400, various alternative filters may be provided in the window, the user 110 may continue to return to the page of FIG. 4B after selecting a target filter therein, and may overlay the selected target filter on content during subsequent filming of the content.

In some embodiments, as shown in FIG. 4B, a filming button 406 may also be displayed in the page 400, the user 110 may trigger the video filming in the second phase by clicking on the button 406, and the terminal device 102 may start to use a camera to film content in response to a trigger operation for the button 406.

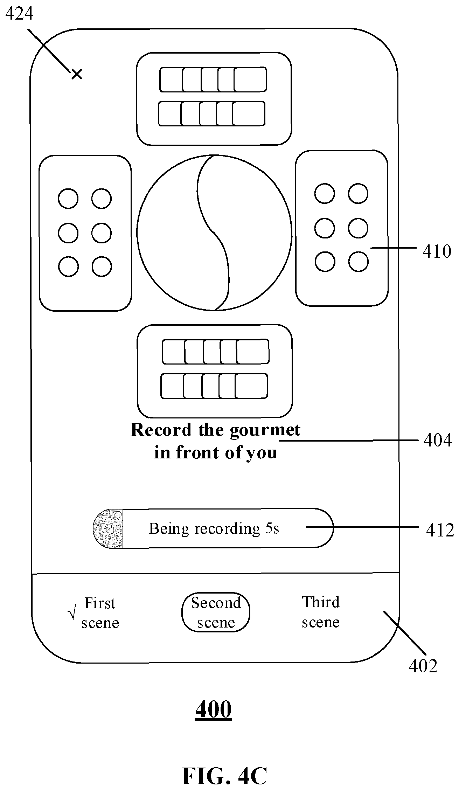

FIG. 4C illustrates a schematic diagram of another exemplary page 400 according to an embodiment of the present disclosure.

As shown in FIG. 4C, after the filming is started, the terminal device 102 may display filmed second content 410 in the page 400. For example, as shown in FIG. 4C, the currently filmed store review video is a delicious food store review video, the corresponding store may be a certain hot pot restaurant, and a hot spot and dishes may be filmed in the second content 410.

In some embodiments, prompt information 404 may still be displayed in the page 400, so that a continuous reminding function can be achieved. As an optional embodiment, as shown in FIG. 4C, during the filming process, a progress bar 412 may also be displayed in the page 400 to prompt the user of the current filming progress. Optionally, the progress bar 412 may further include a filming time countdown to prompt the user of a remaining filming time of the current phase.

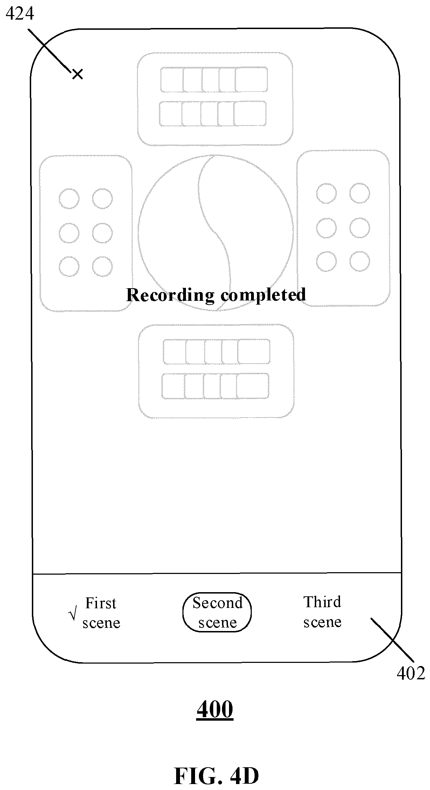

At the end of the filming time countdown, as shown in FIG. 4D, information for indicating that the filming of the second content has been completed may be displayed in the page 400, for example, "Recording completed". As an optional embodiment, the terminal device 102 may generate a video based on the first content and the second content. In this way, the generated video includes gesture snapfilmed and commodity content of the store review scenario, and a store review video with richer content is thus formed. In some embodiments, the terminal device 102 may generate a video based on the first content, the first effect and the second content, so that the corresponding effect is further overlaid on the gesture snapfilmed part of the video, thus further enriching the video content.

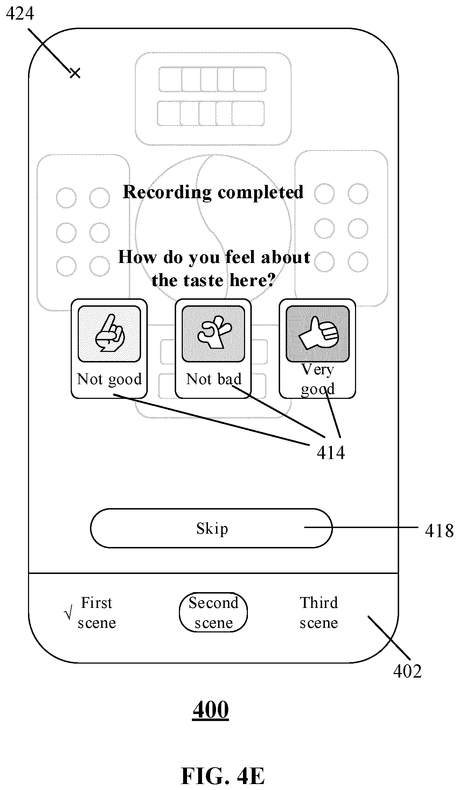

In some embodiments, as shown in FIG. 4E, after the filming of the second content is completed, the video may not be directly generated, but a plurality of first commenting icons 414 may be displayed in the page 400, and the first commenting icons 414 are used for evaluating the filming object of the second content. In this way, the commenting process of an offline scenario is fused into the video filming process, thereby enriching the value of the overall video content.

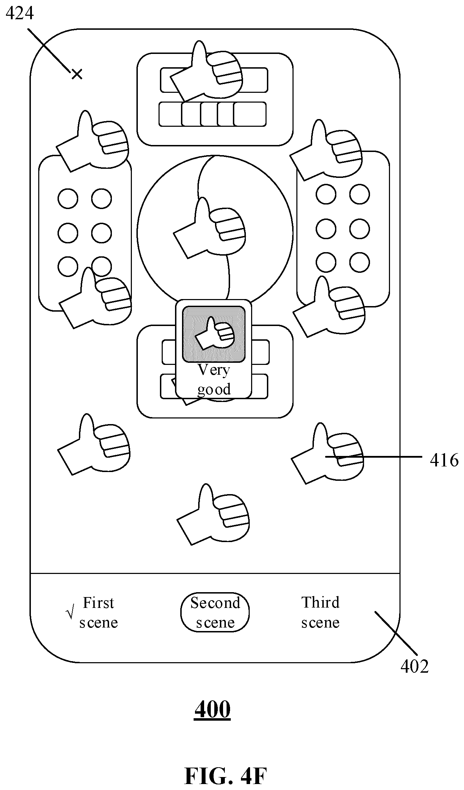

The user may select a target commenting icon from the plurality of first commenting icons 414 as an commenting of the second content according to his/her own experience, and the terminal device 102 may display, in the page 400 in the overlaying manner, a second effect 416 corresponding to the target commenting icon in response to a trigger operation for the target commenting icon (e.g., a "Very good" commenting icon) among the plurality of first commenting icons 414, as shown in FIG. 4F. In this way, the second effect 416 corresponding to user commenting information is overlaid in the second content, thus further enriching the video content. Optionally, as shown in FIG. 4E, a skip button 418 may also be displayed in the page 400, and when the user 110 clicks on the button 418, the terminal device 102 may skip the commenting step in response to a trigger operation for the button 418.

In some embodiments, the terminal device 102 may generate a video based on the first content, the second content and the second effect. In this way, the generated video includes the gesture snapfilmed, the commodity content of the store review scenario and the commenting of the user for the commodity, so that a store review video with richer content is formed. Optionally, the first effect may also be generated in the video, so as to further enrich the video content.

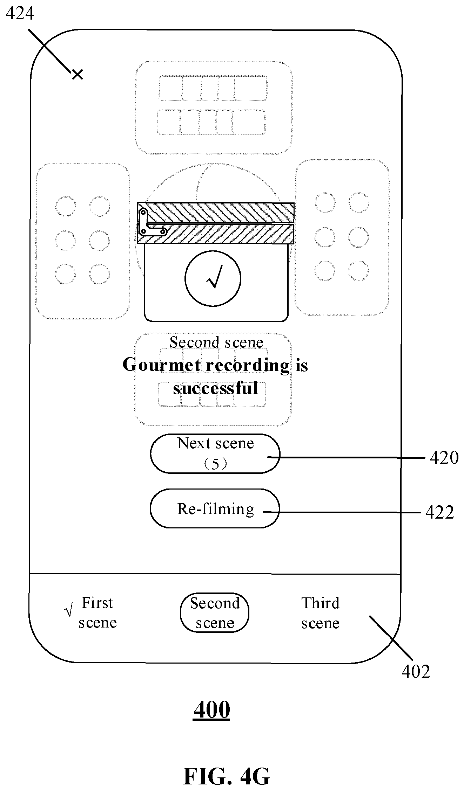

In some embodiments, as shown in FIG. 4G, after the filming of the second content is completed, the video may not be directly generated, but a video in the third phase may continue to be filmed.

Optionally, as shown in FIG. 4G, after the filming of the second content is completed, information for indicating the end of the filming in the second phase may also be displayed in the page 400, for example, "Delicious food recording is successful". Moreover, optionally, an image of the clapper board in the state of clapping end may also be displayed in the page 400, so as to prompt the user of the end of the filming in the second phase in the image-text combination manner. In some embodiments, as shown in FIG. 4G, a next-scene button 420 may also be displayed in the page 400, and when the user 110 clicks on the button 420, the terminal device 102 may start to directly skip to the third scene in response to a trigger operation for the button 420. Optionally, the next-scene button 420 may also include a countdown (e.g., "5" displayed in the button 420 in FIG. 4G indicates that there are still 5 seconds left in the countdown), and if the user 110 does not actively trigger the button 420 at the end of the countdown, it may automatically skip to the third scene. As an optional embodiment, as shown in FIG. 4G, a re-filming button 422 may also be displayed in the page 400, and when the user 110 clicks on the button 422, the terminal device 102 may return to the page of FIG. 4A or FIG. 4B in response to a trigger operation for the button 422, so as to restart the filming of the second scene.

Similarly, as shown in FIGs. 4A-4G, an exit button 424 may also be displayed on a top left corner of the page 400, so that the user may exit the filming process at any time when the user does not want to continue the video filming. The specific implementation process is similar to that in the foregoing embodiment, and thus details are not described herein again.

Then, the third scene may be entered.

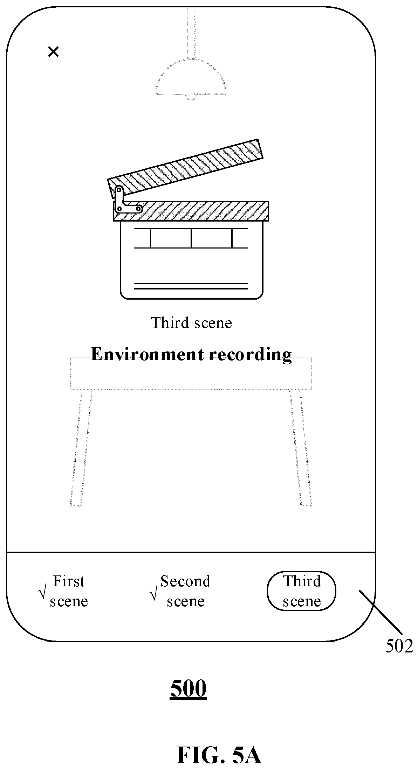

FIG. 5A illustrates a schematic diagram of an exemplary page 500 according to an embodiment of the present disclosure.

As shown in FIG. 5A, opening information of entering the phase may be displayed in a video filming page 500. For example, as shown in FIG. 5A, when entering the third scene, words "Third scene" may be displayed in the page 500, so as to prompt the user to enter the third phase of video filming now. As an optional embodiment, thematic information of the current phase may also be displayed in the page 500, so as to prompt the user of the filming theme of the current phase. For example, as shown in FIG. 5A, words "Environment recording" may be displayed in the page 500, so as to prompt the user that the theme of the current phase is to film a store environment. In some embodiments, as shown in FIG. 5A, an image of a clapper board may also be displayed in the page 500, and the image of the clapper board may also be an image when the clapper board is in a state prior to board clapping, so as to prompt the user that the filming in the current phase is about to be started, thereby enhancing the interestingness of video filming, and improve the user experience.

In some embodiments, as shown in FIG. 5A, a phase display bar 502 may be displayed at the bottom of the page 500, the phase display bar 502 may display all phases of the entire filming process, and may highlight the current phase, thereby prompting the user of the current phase. For example, as shown in FIG. 5A, "Third scene" is highlighted, so as to prompt the user that it is in the third phase of the filming process at present. Optionally, a completed phase (e.g., "√" in front of "First scene" and "Second scene" in FIG. 5A) may also be selected in the phase display bar 502, so as to prompt the user which phases have been completed.

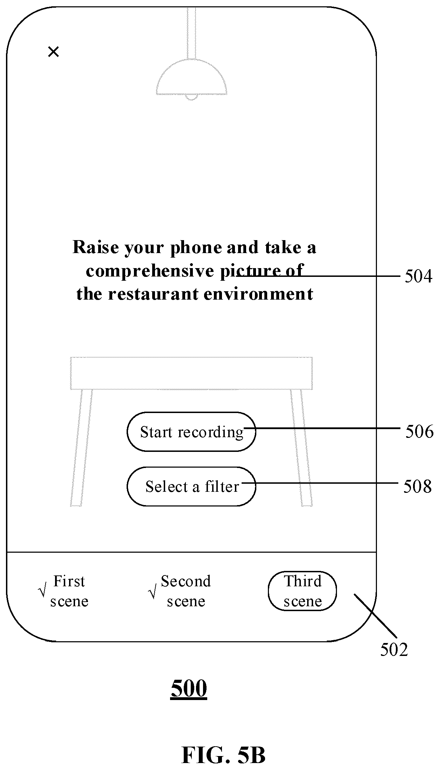

Next, third prompt information 504 for prompting the user to film third content may be displayed in the page 500, as shown in FIG. 5B. A filming object of the third content is different from the filming object of the first content and the filming object of the second content, and optionally, in the store review scenario, the filming object of the third content is the environment of a store.

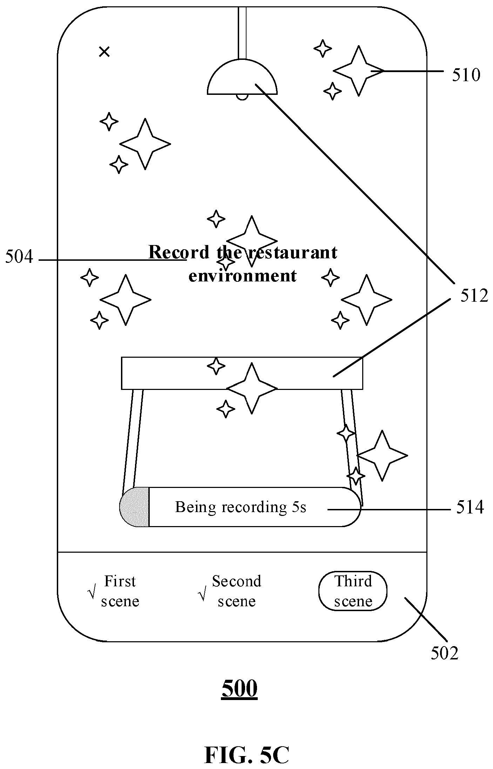

Optionally, as shown in FIG. 5B, a filter selection button 508 may also be displayed in the page 500, the user 110 may click on the button 508 to pop up a filter selection window (not shown in the figure) in the page 500, various alternative filters may be provided in the window, the user 110 may continue to return to the page of FIG. 5B after selecting a target filter therein, and may overlay the selected target filter 510 on content during subsequent filming of the content, as shown in FIG. 5C.

In some embodiments, as shown in FIG. 5B, a filming button 506 may also be displayed in the page 500, the user 110 may trigger the video filming in the third phase by clicking on the button 506, and the terminal device 102 may start to use a camera to film content in response to a trigger operation for the button 506.

FIG. 5C illustrates a schematic diagram of another exemplary page 500 according to an embodiment of the present disclosure.

As shown in FIG. 5C, after the filming is started, the terminal device 102 may display filmed third content 512 in the page 500. For example, as shown in FIG. 5C, the currently filmed store review video is a delicious food store review video, the corresponding store may be a certain hot pot restaurant, and the environment (e.g., lamps and tables) of the hot spot restaurant may be filmed in the third content 512.

In some embodiments, prompt information 504 may still be displayed in the page 500, so that a continuous reminding function can be achieved. As an optional embodiment, as shown in FIG. 5C, during the filming process, a progress bar 514 may also be displayed in the page 500 to prompt the user of the current filming progress. Optionally, the progress bar 514 may further include a filming time countdown to prompt the user of a remaining filming time of the current phase.

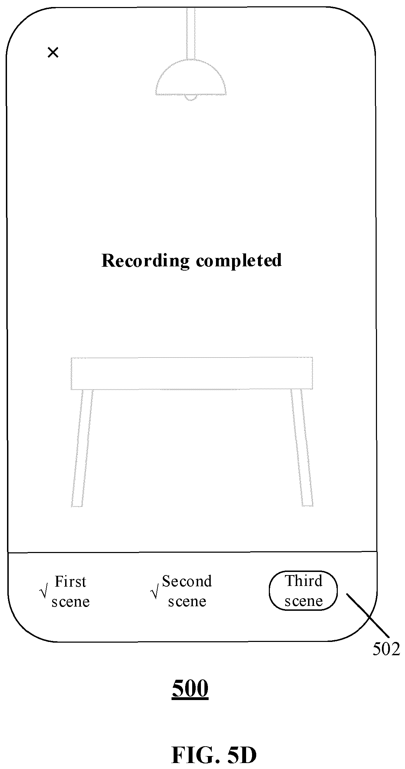

At the end of the filming time countdown, as shown in FIG. 5D, information for indicating that the filming of the third content has been completed may be displayed in the page 500, for example, "Recording completed". As an optional embodiment, the terminal device 102 may generate a video based on the first content, the second content and the third content. In this way, the generated video includes the gesture snapfilmed and the commodity content and the environment content of the store review scenario, and a store review video with richer content is thus formed. In some embodiments, the terminal device 102 may generate a video based on the first content, the first effect and the second content, so that the corresponding effect is also overlaid on the gesture snapfilmed part of the video, thus further enriching the video content.

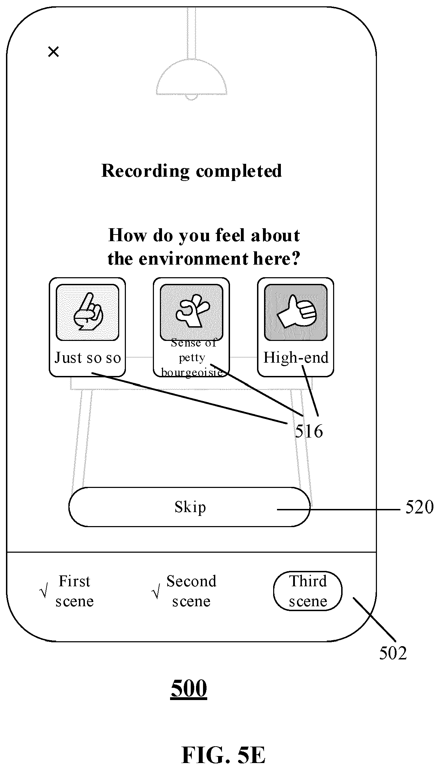

In some embodiments, as shown in FIG. 5E, after the filming of the third content is completed, the video may not be directly generated, but a plurality of second commenting icons 516 may be displayed in the page 500, and the second commenting icons 516 are used for evaluating the filming object of the third content. In this way, the commenting process of the offline scenario is fused into the video filming process, thereby enriching the value of the overall video content.

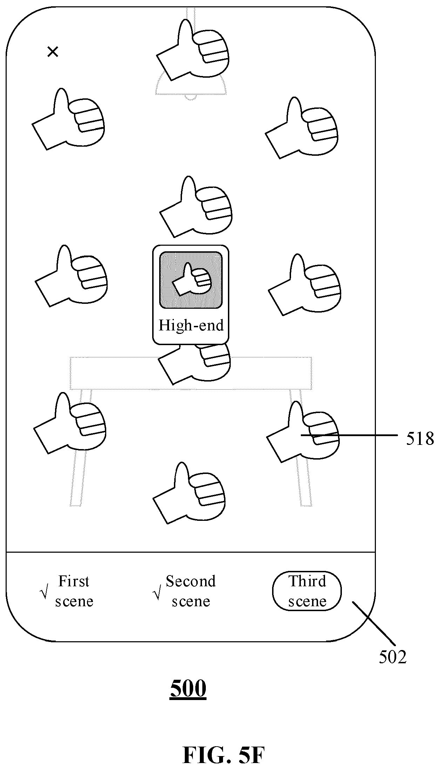

The user may select a target commenting icon from the plurality of second commenting icons 516 as an commenting of the third content according to his/her own experience, and the terminal device 102 may display, in the page 500 in the overlaying manner, a third effect 518 corresponding to the target commenting icon in response to a trigger operation for the target commenting icon (e.g., a "High end" commenting icon) among the plurality of second commenting icons 516, as shown in FIG. 5F. In this way, the third effect 518 corresponding to the user commenting information is overlaid in the third content, thus further enriching the video content. Optionally, as shown in FIG. 5E, a skip button 520 may also be displayed in the page 500, and when the user 110 clicks on the button 520, the terminal device 102 may skip the commenting step in response to a trigger operation for the button 520.

In some embodiments, the terminal device 102 may generate a video based on the first content, the second content, the third content and the third effect. In this way, the generated video includes the gesture snapfilmed, the commodity content and the environment content of the store review scenario, and the commenting of the user for the environment, so that a store review video with richer content is formed. Optionally, the first effect and/or the second effect may also be generated in the video, so as to further enrich the video content.

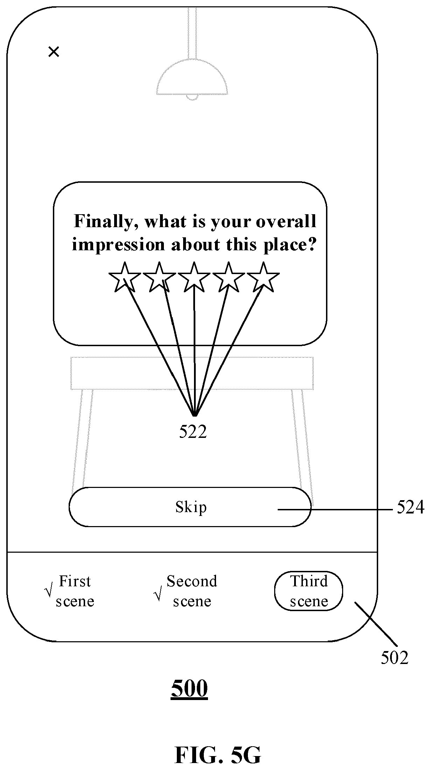

In some embodiments, after the third effect is displayed in the page in the overlaying manner, the video may not be directly generated, but a plurality of third commenting icons 522 are displayed in the page 500, as shown in FIG. 5G, the third commenting icons 522 are used for evaluating the whole store, so that the overall commenting of the store is integrated into the video filming process, thereby enriching the value of the overall video content.

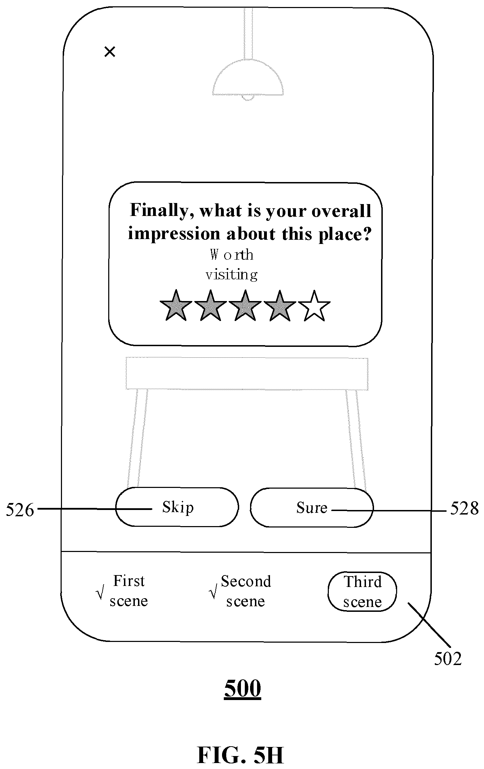

The user may select a target commenting icon from the plurality of third commenting icons 522 as an commenting of the store according to his/her own experience, and the terminal device 102 may enter the page 500 as shown in FIG. 5H in response to a trigger operation for the target commenting icon (e.g., a fourth start) among the plurality of third commenting icons 522, and may display commenting information (e.g., lightening four stars) corresponding to the target commenting icon in the page 500. Optionally, as shown in FIG. 5E, a skip button 520 may also be displayed in the page 500, and when the user 110 clicks on the button 520, the terminal device 102 may skip the commenting step in response to a trigger operation for the button 520.

In some embodiments, as shown in FIG. 5H, a skip button 526 may also be displayed in the page 500, and when the user 110 clicks on the button 526, the terminal device 102 may skip the commenting step in response to a trigger operation for the button 526.

Optionally, as shown in FIG. 5H, a determination button 528 may also be displayed in the page 500, and when the user 110 clicks on the button 528, in response to a trigger operation for the button 528, the terminal device 102 generates, when generating a video, the commenting information corresponding to the target commenting icon in the video (for example, displaying four stars at the end of the video).

It can be understood that, if the filming process further includes a fourth phase, a fifth phase, or even more phases, a fourth scene, a fifth scene and the like are filmed based on foregoing similar processes, and thus details are not described herein again.

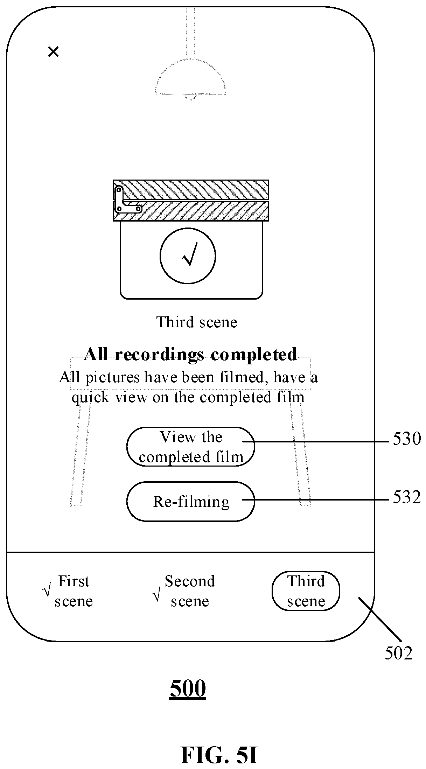

Further, after the entire filming process is ended, as shown in FIG. 5I, information for indicating the end of video filming may also be displayed in the page 500, for example, "All recordings completed". Moreover, optionally, an image of the clapper board in the state of clapping end may also be displayed in the page 500, so as to prompt the user of the end of the video filming in the image-text combination manner. As an optional embodiment, as shown in FIG. 5I, a re-filming button 532 may also be displayed in the page 500, and when the user 110 clicks on the button 532, the terminal device 102 may return to the page of FIG. 5A or FIG. 5B in response to a trigger operation for the button 532, so as to restart the filming of the third scene.

In some embodiments, as shown in FIG. 5I, a completed film view button may also be displayed in the page 500, and when the user 110 clicks on the button 530, the terminal device 102 may start to generate a video in response to a trigger operation for the button 530.

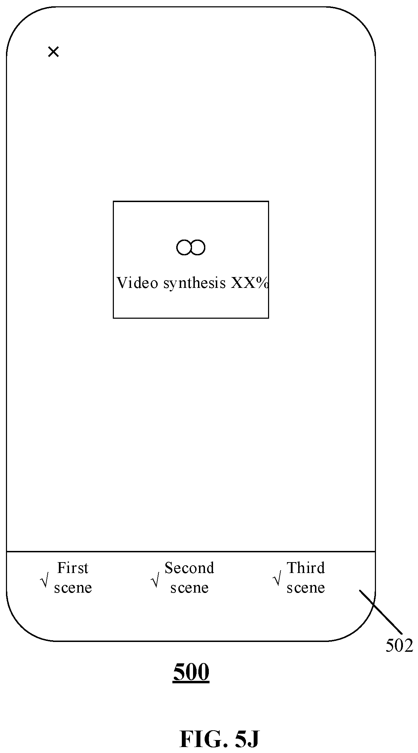

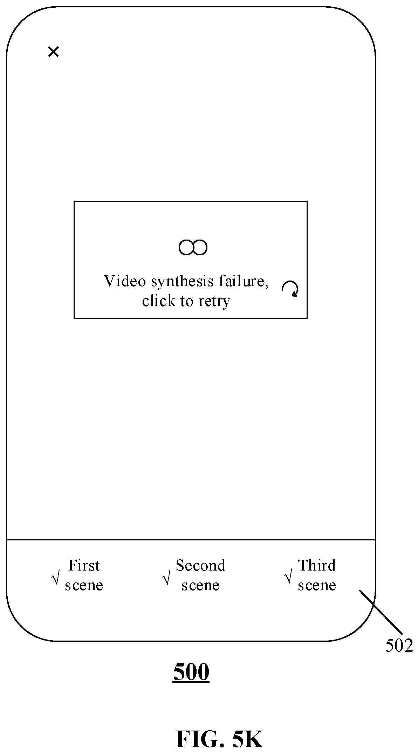

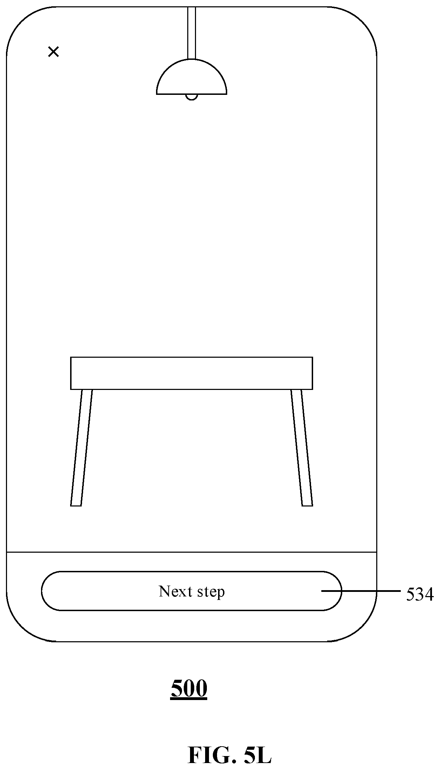

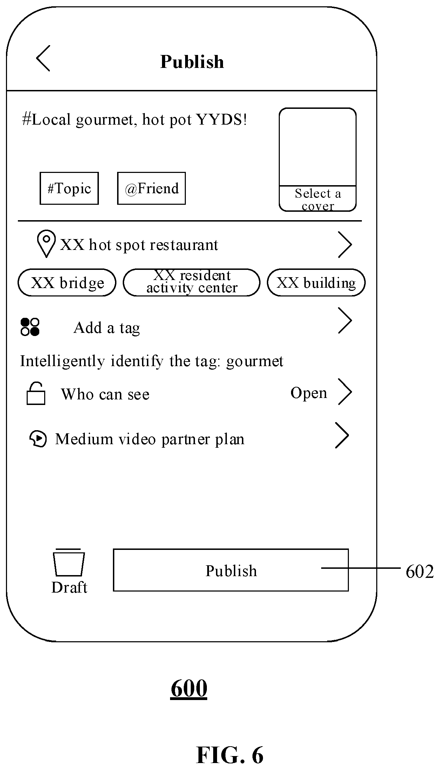

After the generation of the video is started, information of being synthesizing the video may also be displayed in the page 500, as shown in FIG. 5J. Optionally, if the video generation fails, information of video synthesis failure may also be displayed, as shown in FIG. 5K. After the video synthesis is completed, a video cover may be displayed in the page 500, as shown in FIG. 5L, optionally, a next-step button 534 may also be displayed in the page 500, and when the user 110 clicks on the button 534, the terminal device 102 may display a page 600 shown in FIG. 6 in response to a trigger operation for the button 534, so that the user 110 fills in copywriting of the video and selects a corresponding cover, a topic, a tag, positioning, a disclosure range, and the like.

After completing the editing, the user 110 may click on a publish button 602 to publish the video to a corresponding platform (for example, uploading the video to the server 104), so that users within the corresponding disclosure range can view the video.

It can be seen from the above embodiments that, the method for filming and generating the video provided in the embodiments of the present disclosure takes an offline store review scenario as a core, and constructs a template and expandable video filming capability with effects. Different effect scripts are organized by a structured unit, so that the user is promoted to produce interesting videos, and meanwhile, information such as dishes, environments, commenting and other consumption values of the store can be contributed.

By using the method for filming and generating the video provided in the embodiments of the present disclosure, a coherent guiding process can be provided, a picture is available for guiding the user of content to be filmed before the filming is started, AR effect feedback is provided during the filming, commenting interaction guidance is provided when the filming is completed, and when a completed film is formed, a high-quality video is produced by using an automatic technology.

By using the method for filming and generating the video provided in the embodiments of the present disclosure, a flexible interaction structure can be provided, and in the three steps of guiding-filming-commenting, guidance information can be configured according to project requirements, so that the user can film different video angles.

By using the method for filming and generating the video provided in the embodiments of the present disclosure, video usefulness interaction can be provided, so that the user can output the commenting information in the video filming process, and the value of the overall video content is enriched.

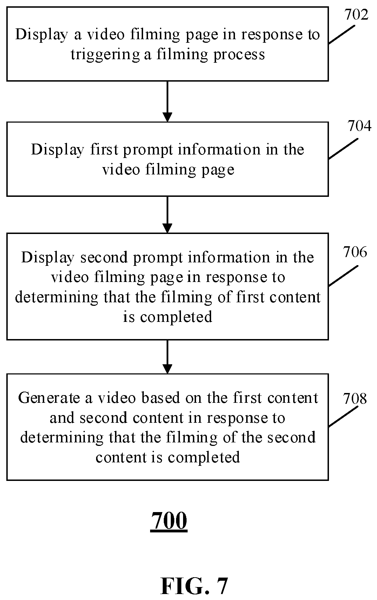

An embodiment of the present disclosure further provides a method for filming and generating a video. FIG. 7 illustrates a schematic processchart of an exemplary method 700 provided in an embodiment of the present disclosure. As shown in FIG. 7, the method 700 may be applied to the terminal device 102 in FIG. 1, and may further include the following steps.

In step 702, a video filming page (e.g., the page 300 of FIG. 3B) is displayed in response to triggering a filming process.

In some embodiments, before displaying the video filming page, the method further includes: obtaining an identification object (e.g., a QR code); and triggering the filming process in response to determining that the identification object is a target identification object for starting the filming process. Therefore, the filming process can be combined with an offline scenario.

In some embodiments, triggering the filming process in response to determining that the identification object is the target identification object for starting the filming process includes: in response to determining that the identification object is the target identification object for starting the filming process, determining whether an activity corresponding to the target identification object is in a validity period; and in response to determining that the activity is in the validity period, triggering the filming process. Therefore, the filming process can be combined with the activity.

In some embodiments, before displaying the video filming page, the method further includes: triggering the filming process in response to determining that the current location of the user is in a target store. Therefore, the filming process can be automatically triggered based on positioning.

In step 704, first prompt information (e.g., the prompt information 304 of FIG. 3B) is displayed in the video filming page, wherein the first prompt information is used for prompting the user to film first content. Therefore, the prompt information is used for guiding the user, so that the quality of the filmed content is higher.

In some embodiments, a filming object of the first content is an interaction gesture; and the first prompt information includes a gesture image corresponding to the interaction gesture, thereby improving the interestingness and the sense of ceremony via gesture interaction.

In some embodiments, after displaying the first prompt information in the video filming page, the method further includes: filming the first content and displaying the first content in the video filming page; and in response to determining that the first content includes a user gesture (e.g., the user gesture 308 in FIG. 3C) corresponding to the interaction gesture, displaying, in the video filming page in an overlaying manner, a first effect (e.g., the effect 312 in FIG. 3D) corresponding to the interaction gesture, thereby enriching a video picture.

In step 706, in response to determining that the filming of the first content is completed, second prompt information (e.g., the prompt information 404 of FIG. 4B) is displayed in the video filming page (e.g., the page 400 of FIG. 4B), wherein the second prompt information is used for prompting the user to film second content. Therefore, the prompt information is used for guiding the user, so that the quality of the filmed content is higher. Optionally, a filming object of the second content is different from the filming object of the first content, so that two kinds of different content can be included in a video, and the video content is thus enriched.

In some embodiments, the video is a store review video, and the filming object of the second content is a commodity provided in a store, so that the content of the store review video can be enriched, and the quality of the store review video can be improved.

In step 708, in response to determining that the filming of the second content is completed, a video is generated based on the first content and the second content, so that two kinds of different content can be included in the video, and the video content is thus enriched.

In some embodiments, generating the video based on the first content and the second content includes: generating the video based on the first content, the first effect and the second content, thereby further enriching the video content.

In some embodiments, after displaying the second prompt information in the video filming page, the method further includes: filming the second content (e.g., the content 410 in FIG. 4C) and displaying the second content in the video filming page; in response to determining that the filming of the second content is completed, displaying a plurality of first commenting icons (e.g., the icon 414 in FIG. 4E) in the video filming page; and in response to a trigger operation for a target commenting icon among the plurality of first commenting icons, displaying, in the video filming page in the overlaying manner, a second effect (e.g., the effect 416 in FIG. 4F) corresponding to the target commenting icon.

In some embodiments, generating the video based on the first content and the second content includes: generating the video based on the first content, the second content and the second effect, thereby further enriching video content.

In some embodiments, the method 700 further includes: in response to determining that the filming of the second content is completed, displaying third prompt information (e.g., the prompt information 504 in FIG. 5B) in the video filming page (e.g., the page 500 in FIG. 5B), wherein the third prompt information is used for prompting the user to film third content; and a filming object of the third content is different from the filming object of the first content and the filming object of the second content, so that three kinds of different content can be included in the video, and the video content is thus enriched. Optionally, the filming object of the third content is an environment of the store, so that the content of the store review video can be enriched.

In some embodiments, after displaying the third prompt information in the video filming page, the method further includes: filming the third content (e.g., the content 512 in FIG. 5C) and displaying the third content in the video filming page; in response to determining that the filming of the third content is completed, displaying a plurality of second commenting icons (e.g., the icon 516 of FIG. 5E) in the video filming page; and in response to a trigger operation for a target commenting icon among the plurality of second commenting icons, displaying, in the video filming page in the overlaying manner, a third effect (e.g., the effect 518 in FIG. 5F) corresponding to the target commenting icon.

In some embodiments, generating the video based on the first content and the second content includes: generating the video based on the first content, the second content, the third content and the third effect, thereby further enriching the video content.

In some embodiments, after displaying, in the video filming page in the overlaying manner, the third effect corresponding to the target commenting icon, the method further includes: displaying a plurality of third commenting icons (e.g., the icon 522 in FIG. 5G) in the video filming page.

In some embodiments, generating the video based on the first content and the second content includes: in response to a trigger operation for a target commenting icon among the plurality of third commenting icons, generating the video based on the first content, the second content, the third content, the third effect, and the target commenting icon among the plurality of third commenting icons, thereby further enriching the video content.

It should be noted that the method in the embodiments of the present disclosure may be executed by a single device, for example, a computer or a server, or the like. The method in the present embodiment may also be applied to a distributed scenario and is completed by the mutual cooperation of a plurality of devices. In the case such a distributed scenario, one of the plurality of devices may execute only one or more steps in the method of the embodiments of the present disclosure, and the plurality of devices interact with each other to complete the method.

It should be noted that some embodiments of the present disclosure are described above. Other embodiments are within the scope of the appended claims. In some cases, actions or steps recited in the claims may be executed in an order different from that in the above embodiments and may still achieve desired results. In addition, the processes depicted in the figures do not necessarily require a particular order shown or a sequential order to achieve the desired results. In some embodiments, multitasking processing and parallel processing are also possible or may be advantageous.

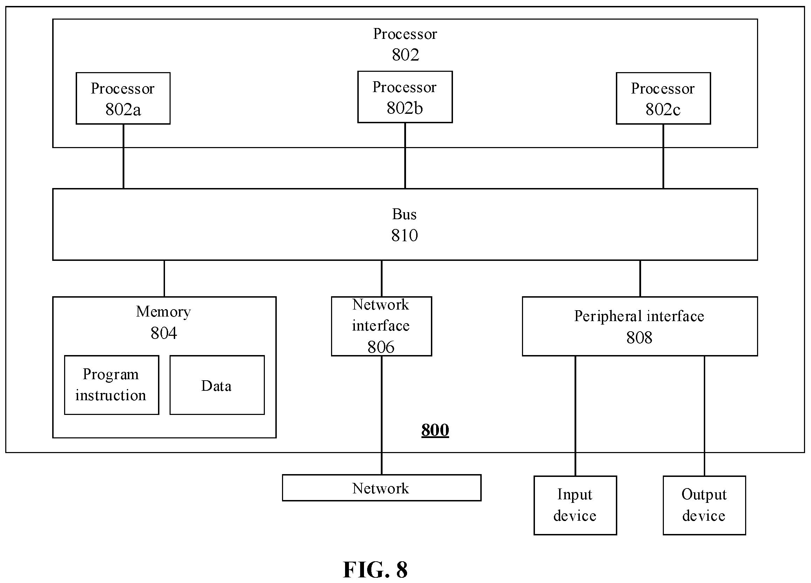

An embodiment of the present disclosure further provides a computer device, configured to implement the above method 700. FIG. 8 illustrates a schematic diagram of a hardware structure of an exemplary computer device 800 provided in an embodiment of the present disclosure. The computer device 800 may be configured to implement the terminal device 102 in FIG. 1. In some scenarios, the computer device 800 may also be configured to implement the server 104 and the database server 106 in FIG. 1.

As shown in FIG. 8, the computer device 800 may include a processor 802, a memory 804, a network module 806, a peripheral interface 808 and a bus 810, wherein the processor 802, the memory 804, the network module 806 and the peripheral interface 808 are communicatively connected with each other in the computer device 800 via the bus 810.

The processor 802 may be a central processing unit (CPU), an image processor, a neural network processor (NPU), a micro-programmed control unit (MCU), a programmable logic device, a digital signal processor (DSP), an application specific integrated circuit (ASIC), or one or more integrated circuits. The processor 802 may be configured to execute functions related to the technology described in the present disclosure. In some embodiments, the processor 802 may further include a plurality of processors which are integrated into a single logical component. For example, as shown in FIG. 8, the processor 802 may include a plurality of processors 802a, 802b and 802c.

The memory 804 may be configured to store data (e.g., instructions, computer code, and the like). As shown in FIG. 8, the data stored in the memory 804 may include program instructions (e.g., program instructions for implementing the method for detecting a frame rate in the embodiments of the present disclosure) and data to be processed (e.g., the memory may store configuration files of other modules, and the like). The processor 802 may also access program instructions and data stored in the memory 804, and execute the program instructions to operate the data to be processed. The memory 804 may include a volatile storage apparatus or a non-volatile storage apparatus. In some embodiments, the memory 804 may include a random access memory (RAM), a read only memory (ROM), an optical disk, a magnetic disk, a hard disk, a solid state disk (SSD), a flash memory, a memory stick, etc.

The network interface 806 may be configured to provide communication with other external devices for the computer device 800 via a network. The network may be any wired or wireless network capable of transmitting and receiving data. For example, the network may be a wired network, a local wireless network (e.g., Bluetooth, WiFi, near field communication (NFC), and the like), a cellular network, the Internet, or a combination thereof. It can be understood that the type of the network is not limited to the above specific examples.

The peripheral interface 808 may be configured to connect the computer device 800 with one or more peripheral apparatuses, so as to implement information input and output. For example, the peripheral apparatuses may include an input device such as a keyboard, a mouse, a touchpad, a touch screen, a microphone, various sensors, and an output device such as a display, a speaker, a vibrator, an indicator light, etc.

The bus 810 may be configured to transmit information between various components (e.g., the processor 802, the memory 804, the network interface 806 and the peripheral interface 808) of the computer device 800, such as an internal bus (e.g., a processor-memory bus), an external bus (a USB port, a PCI-E bus), and the like.

It should be noted that although the architecture of the computer device 800 only illustrates the processor 802, the memory 804, the network interface 806, the peripheral interface 808 and the bus 810, in a specific implementation process, the architecture of the computer device 800 may further include other components required for implementing normal operations. In addition, those skilled in the art can understand that the architecture of the computer device 800 may also include only components necessary for implementing the solutions of the embodiments of the present disclosure, and does not necessarily include all components shown in the figures.

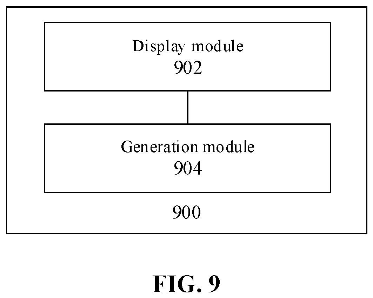

An embodiment of the present disclosure further provides an apparatus for giving a gift in a live streaming room. FIG. 9 illustrates a schematic diagram of an exemplary apparatus 900 provided in an embodiment of the present disclosure. The apparatus 900 may include the following structures.
a display module 902, configured to: display a video filming page in response to triggering a filming process; display first prompt information in the video filming page, wherein the first prompt information is used for prompting a user to film first content; and display second prompt information in the video filming page in response to determining that the filming of the first content is completed, wherein the second prompt information is used for prompting the user to film second content, and a filming object of the second content is different from a filming object of the first content; and
a generation module 904, configured to generate a video based on the first content and the second content in response to determining that the filming of the second content is completed.

In some embodiments, the filming object of the first content is an interaction gesture; and the first prompt information includes a gesture image corresponding to the interaction gesture.

In some embodiments, the display module 902 is configured to: film the first content and display the first content in the video filming page; and in response to determining that the first content includes a user gesture corresponding to the interaction gesture, display, in the video filming page in an overlaying manner, a first effect corresponding to the interaction gesture.

In some embodiments, the generation module 904 is configured to generate a video based on the first content, the first effect and the second content.

In some embodiments, the display module 902 is configured to: in response to determining that the filming of the second content is completed, display third prompt information in the video filming page, wherein the third prompt information is used for prompting the user to film third content; and a filming object of the third content is different from the filming object of the first content and the filming object of the second content.

In some embodiments, the video is a store review video, the filming object of the second content is a commodity provided in a store, and the filming object of the third content is an environment of the store.

In some embodiments, the display module 902 is configured to: film the second content and display the second content in the video filming page; in response to determining that the filming of the second content is completed, display a plurality of first commenting icons in the video filming page; and in response to a trigger operation for a target commenting icon among the plurality of first commenting icons, display, in the video filming page in the overlaying manner, a second effect corresponding to the target commenting icon.

In some embodiments, the generation module 904 is configured to generate a video based on the first content, the second content and the second effect.

In some embodiments, the display module 902 is configured to: film the third content and display the third content in the video filming page; in response to determining that the filming of the third content is completed, display a plurality of second commenting icons in the video filming page; and in response to a trigger operation for a target commenting icon among the plurality of second commenting icons, display, in the video filming page in the overlaying manner, a third effect corresponding to the target commenting icon.

In some embodiments, the generation module 904 is configured to generate a video based on the first content, the second content, the third content and the third effect.

In some embodiments, the display module 902 is configured to: display a plurality of third commenting icons in the video filming page; and
the generation module 904 is configured to: in response to a trigger operation for a target commenting icon among the plurality of third commenting icons, generate a video based on the first content, the second content, the third content, the third effect, and the target commenting icon among the plurality of third commenting icons.

In some embodiments, the display module 902 is configured to: obtain an identification object; and trigger the filming process in response to determining that the identification object is a target identification object for starting the filming process.

In some embodiments, the display module 902 is configured to: in response to determining that the identification object is the target identification object for starting the filming process, determine whether an activity corresponding to the target identification object is in a validity period; and in response to determining that the activity is in the validity period, trigger the filming process.

In some embodiments, the display module 902 is configured to trigger the filming process in response to determining that the current location of the user is in a target store.

For ease of description, the above apparatus is divided into various modules for description according to functions. Certainly, when the present disclosure is implemented, the functions of the modules may be implemented in one or more pieces of software and/or hardware.

The apparatus in the above embodiments is configured to implement the corresponding method 700 in any of the foregoing embodiments, and has the beneficial effects of the corresponding method embodiments, thus details are not repeated herein again.

Based on the same inventive concept, corresponding to the method in any of the above embodiments, the present disclosure further provides a non-transitory computer-readable storage medium, wherein a computer instruction is stored in the non-transitory computer-readable storage medium, and the computer instruction is configured to cause a computer to execute the method 700 according to any of the above embodiments.

The computer-readable medium of the present embodiment includes persistent and non-persistent, movable and non-removable media that may store information by using any method or technology. The information may be computer-readable instructions, data structures, program modules or other data. Examples of the computer storage medium include, but are not limited to, a phase change random access memory (PRAM), a static random access memory (SRAM), a dynamic random access memory (DRAM), other types of random access memories (RAMs), a read only memory (ROM), an electrically erasable programmable read only memory (EEPROM), a flash memory or other memory technology, a compact disc-read only memory (CD-ROM), a digital versatile disk (DVD) or other optical storages, a magnetic cassette, a magnetic tape-magnetic disk storage or other magnetic storage devices, or any other non-transmission medium, which may be used for storing information accessible by a computing device.

The computer instruction stored in the storage medium in the above embodiment is configured to cause the computer to execute the method 700 according to any of the above embodiments, and has the beneficial effects of the corresponding method embodiments, thus details are not repeated herein again.

Based on the same inventive concept, corresponding to the method 700 of any of the above embodiments, the present disclosure further provides a computer program product, including a computer program. In some embodiments, the computer program may be executed by one or more processors, so that the processor executes the method 700. Corresponding to an execution body corresponding to each step in the embodiments of the method 700, and the processor for executing the corresponding step may belong to the corresponding execution body.

The computer program product in the above embodiment is configured to cause the processor to execute the method 700 according to any of the above embodiments, and has the beneficial effects of the corresponding method embodiments, thus details are not repeated herein again.

It should be understood by those ordinary skilled in the art to which the present disclosure belongs that, the discussion of any of the above embodiments is merely exemplary and is not intended to imply that the scope of the present disclosure (including the claims) is limited to these examples; and under the idea of the present disclosure, the technical features in the above embodiments or different embodiments may be combined, the steps may be implemented in any order, and there are many other variations of different aspects of the embodiments of the present disclosure as described above, which are not provided in details for the sake of brevity.

In addition, for simplicity of illustration and discussion, and in order not to obscure the embodiments of the present disclosure, well-known power supplies/ground connections with integrated circuit (IC) chips and other components may be illustrated or not in the provided drawings. In addition, the apparatus may be illustrated in the form of a block diagram, so as to avoid obscuring the embodiments of the present disclosure, and this also takes into account the fact that details regarding the embodiments of these apparatuses in block diagrams are highly dependent on platforms on which the embodiments of the present disclosure will be implemented (i.e., these details should completely fall within the understanding range of those skilled in the art). Where specific details (e.g., circuits) are set forth to describe the exemplary embodiments of the present disclosure, it will be apparent to those skilled in the art that the embodiments of the present disclosure may be implemented without these specific details or changes in these specific details. Accordingly, these descriptions are to be regarded as illustrative rather than restrictive.

Although the present disclosure has been described in combination with specific embodiments of the present disclosure, many alternatives, modifications and variations of these embodiments will be apparent to those ordinary skilled in the art according to the foregoing description. For example, other memory architectures (e.g., a dynamic RAM (DRAM)) may use the embodiments discussed.

The embodiments of the present disclosure are intended to cover all such alternatives, modifications and variations that fall within the broad scope of the appended claims. Therefore, any omissions, modifications, equivalent replacements, improvements and the like, made within the spirit and principles of the embodiments of the present disclosure, shall fall within the protection scope of the present disclosure.

## Claims

1. A method for filming and generating a video, comprising:
displaying, in response to triggering a filming process, a video filming page;
displaying first prompt information in the video filming page, the first prompt information being used for prompting a user to film first content;
displaying, in response to determining that the filming of the first content is completed, second prompt information in the video filming page, the second prompt information being used for prompting the user to film second content, and a filming object of the second content being different from a filming object of the first content; and
generating, in response to determining that the filming of the second content is completed, a video based on the first content and the second content.

2. The method according to claim 1, wherein the filming object of the first content is an interaction gesture; and the first prompt information comprises a gesture image corresponding to the interaction gesture.

3. The method according to claim 2, further comprising: after displaying the first prompt information in the video filming page,
filming the first content and displaying the first content in the video filming page; and
displaying, in response to determining that the first content comprises a user gesture corresponding to the interaction gesture, a first effect corresponding to the interaction gesture in the video filming page in an overlapping manner.

4. The method according to claim 3, wherein generating the video based on the first content and the second content comprises:
generating the video based on the first content, the first effect and the second content.

5. The method according to claim 1, further comprising: before generating the video based on the first content and the second content,
displaying, in response to determining that the filming of the second content is completed, third prompt information in the video filming page, the third prompt information being used for prompting the user to film third content; and a filming object of the third content being different from the filming object of the first content and the filming object of the second content.

6. The method according to claim 5, wherein the video is a store visiting video, the filming object of the second content is a commodity provided in the store, and the filming object of the third content is an environment of the store.

7. The method according to claim 6, further comprising: after displaying the second prompt information in the video filming page,
filming the second content to display the second content in the video filming page;
displaying, in response to determining that the filming of the second content is completed, a plurality of first commenting icons in the video filming page; and
displaying, in response to a trigger operation for a target commenting icon among the plurality of first commenting icons, a second effect corresponding to the target commenting icon in the video filming page in an overlaying manner.

8. The method according to claim 7, wherein generating the video based on the first content and the second content comprises:
generating the video based on the first content, the second content and the second effect.

9. The method according to claim 6, further comprising: after displaying the third prompt information in the video filming page,
filming the third content to display the third content in the video filming page;
displaying, in response to determining that the filming of the third content is completed, a plurality of second commenting icons in the video filming page; and
displaying, in response to a trigger operation for a target commenting icon among the plurality of second commenting icons, a third effect corresponding to the target commenting icon, in the video filming page in the overlaying manner.

10. The method according to claim 9, wherein generating the video based on the first content and the second content comprises:
generating the video based on the first content, the second content, the third content and the third effect.

11. The method according to claim 9, further comprising: after displaying the third effect corresponding to the target commenting icon in the video filming page in the overlaying manner, displaying a plurality of third commenting icons in the video filming page; and
generating the video based on the first content and the second content comprises: generating, in response to a trigger operation for a target commenting icon of the plurality of third commenting icons, the video based on the first content, the second content, the third content, the third effect, and the target commenting icon of the plurality of third commenting icons.

12. The method according to claim 1, wherein further comprising: before displaying the video filming page,
obtaining an identification object; and
triggering, in response to determining that the identification object is a target identification object for starting the filming process, the filming process.

13. The method according to claim 12, wherein triggering the filming process in response to determining that the identification object is the target identification object for starting the filming process comprises:
determining, in response to determining that the identification object is the target identification object for starting the filming process, whether an activity corresponding to the target identification object is in a validity period; and
triggering in response to determining that the activity is in the validity period, the filming process.

14. The method according to claim 6, further comprising: before displaying the video filming page, triggering, in response to determining that the current location of the user is in a target store, the filming process.

15. An apparatus for filming and generating a video, comprising:
a display module, configured to: display, in response to triggering a filming process, a video filming page; display first prompt information in the video filming page, the first prompt information being used for prompting a user to film first content; and display, in response to determining that the filming of the first content is completed, second prompt information in the video filming page, the second prompt information being used for prompting the user to film second content, and a filming object of the second content being different from a filming object of the first content; and
a generation module, configured to: generate, in response to determining that the filming of the second content is completed, a video based on the first content and the second content.

16. A computer device, comprising one or more processors, a memory, and one or more programs, wherein the one or more programs are stored in the memory and are executed by the one or more processors, and the program comprises instructions for performing the method according to any of claims 1-14.

17. A non-volatile computer-readable storage medium, comprising a computer program, wherein the computer program, when executed by one or more processors, causes the processor to perform the method according to any of claims 1-14.

18. A computer program product, comprising computer program instructions, wherein the computer program instructions when executed on a computer, cause the computer to perform the method according to any of claims 1-14.
